# EUROPEAN PATENT APPLICATION

(11) **EP 0 761 928 A2**
(43) Date of publication of application: **12.03.1997**
(21) Application number: 96305941.5
(22) Date of filing: 14.08.1996
(51) Int. Cl.: F01D 5/06

(54) **Edge geometry to facilitate eddy-current inspection**

(30) Priority: 31.08.1995 US 521713
(71) Applicant: UNITED TECHNOLOGIES CORPORATION, Hartford, CT 06101 (US)
(72) Inventor: James, Kary D., Jupiter, Florida 33478 (US); Pirsig, William W., Moscow (RU); Webster, Henry K., Jupiter, Florida 33478 (US)
(74) Representative: Leckey, David Herbert

(57) **Abstract**

A part 10 has an edge contour 12 incorporated therein which includes a first surface (20) of partial revolution about a first reference axis (22), and a second surface (24) of partial revolution about a second reference axis (26). The first reference axis (22) is parallel to the second reference axis (26) and separated therefrom by a reference distance (28), the minimum distance between the first reference axis and the first surface defines a first minimum distance (30), the minimum distance between the second reference axis and the second surface defines a second minimum distance (32), and the sum of the first and second minimum distances is greater than the reference distance.

## Description

This invention relates to parts with edge contours and in particular to eddy current inspectable parts, and more particularly such parts wherein the edges thereof are known to be locations of high stress concentrations in the particular part.

Designers of axial flow gas turbine engines, such as the type used on aircraft, are constantly seeking to increase the thrust-to-weight ratio thereof. Since increases in thrust often come at the expense of fuel efficiency, designers often try to redesign the parts of the engine to remove mass without reducing the structural integrity of the parts below that which is required for safe operation of the engine. While this technique of increasing the thrust-to-weight ratio has proven successful, parts so designed are typically more susceptible to rapid crack propagation, and catastrophic failure, than the parts from which they were designed. This results from the fact that in the lighter design of the part the stresses are typically higher, fostering crack fracture. Accordingly, inspection of such parts at initial manufacture, and at regular maintenance intervals, is critical to safe operation of the engine.

Unfortunately, crack propagation in an edge of a part may occur from a site which is not readily detectable with the naked eye, and, in the case of a flaw internal to the part, not visually detectable at all. Accordingly, other techniques of identifying minute cracks or flaws must be used.

One of the methods of inspecting for cracks and flaws is called eddy current inspection. In eddy current inspection, a cylindrical probe is placed adjacent to, but in spaced relation to an edge of a part. The probe generates a magnetic field which rotates during the inspection procedure, and is measured by sensors. As the magnetic field passes through the edge of the part, small cracks or flaws cause distortions in the magnetic field, and these distortions are detected by the sensors. Additional testing of the type known in the art can then be performed to determine whether the part can withstand the stresses encountered normal engine operation.

One limitation of eddy current inspection is that for a given curved edge, the probe must have a radius nearly equal to, but slightly less than, the radius of curvature of the edge of the part. Accordingly, where a part has a curved edge that is to be inspected by eddy current, a probe having a diameter approximately equal to the radius of curvature of that edge must be acquired. In the case of an annular spacer of the type used between rotor stages of a gas turbine engine, the radius of curvature of the inner edge may be so large that the eddy current probe, which must be approximately the same diameter as the radius of curvature of the edge being inspected, would be prohibitively expensive, yet could only be used on parts having a similar radius of curvature.

What is needed is an edge contour that allows an edge to be inspected by the eddy current inspection process without requiring the acquisition of large radius probes that are useful only on parts having a specific radius of curvature.

It is therefore an object of the present invention to provide an edge contour which allows a single eddy current probe to be used to inspect parts having an edge significantly larger than the radius of curvature of the probe.

According to the present invention, a part has an edge contour incorporated therein which includes a first surface of partial revolution about a first reference axis, and a second surface of partial revolution about a second reference axis, wherein the first reference axis is parallel to the second reference axis and separated therefrom by a reference distance, the minimum distance between the first reference axis and the first surface defines a first minimum distance, the minimum distance between the second reference axis and the second surface defines a second minimum distance, and the sum of the first and second minimum distances is greater than the reference distance.

A preferred embodiment of the invention will now be described with reference to the accompanying drawings in which:

Figure 1 is a partial plan view of the edge of a spacer for a gas turbine engine incorporating the edge contour of the present invention.

Figure 2 is a cross sectional view of the edge contour of the present invention taken along line 2-2 of Figure 1.

Figure 3 is a cross sectional view taken along line 3-3 of Figure 2.

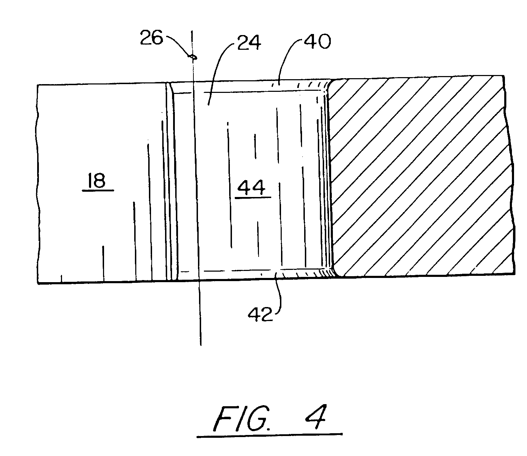

Figure 4 is a cross sectional view taken along line 4-4 of Figure 2.

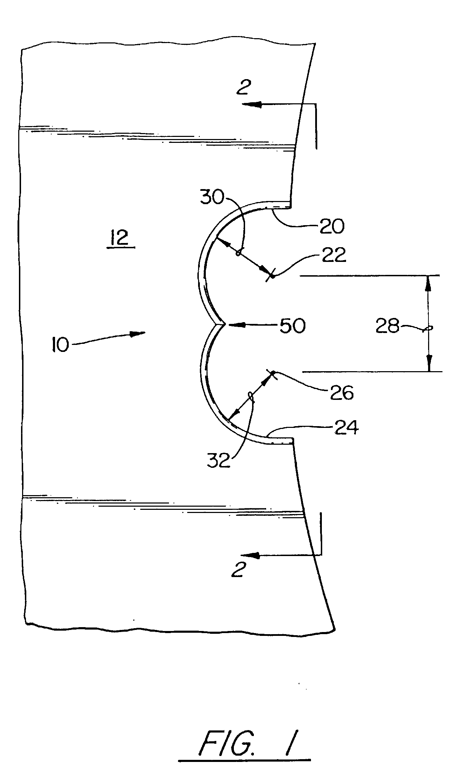

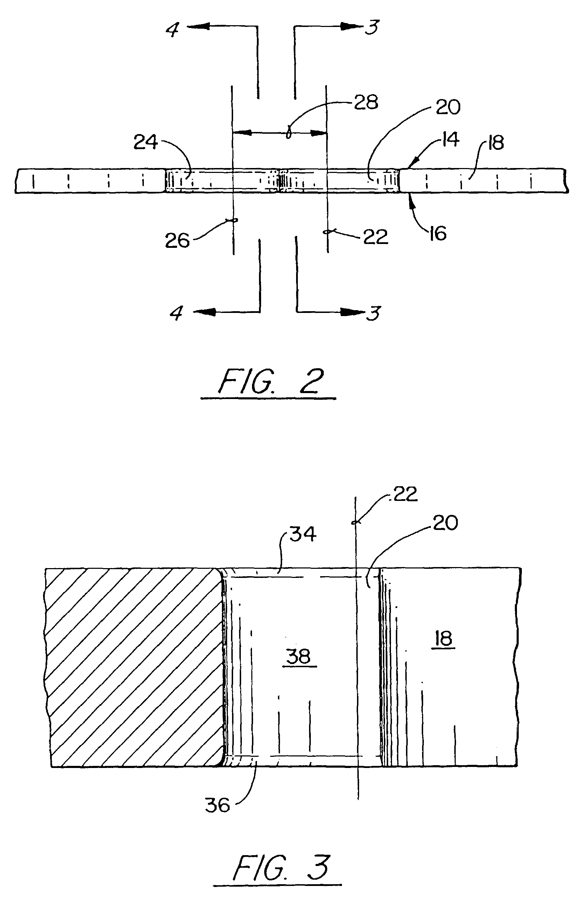

An edge contour 10 embodying the present invention is shown in Figure 1 incorporated into a spacer 12 of the type used on gas turbine engines. It is to be understood that, although the present invention is shown and described incorporated in a spacer 12, the invention is applicable to any part or component having an edge for which the eddy current inspection technique is desired. As shown in Figure 2, the present invention is incorporated in a part 12 having a first face 14, and a second face 16 in spaced relation to the first face 14. The first and second faces 14, 16 terminate in an edge 18, and the edge contour 10 of the present invention is incorporated therein.

As shown in Figure 1, the edge contour 10 of the present invention includes a first surface of partial revolution 20 about a first reference axis 22, and a second surface of partial revolution 24 about a second reference axis 26. As used herein, the term "surface of partial revolution" means a surface which is generated by revolving a line or curve about a particular axis less than one complete revolution. Therefore, the word "partial" refers to a part of a revolution, as opposed to a complete revolution about the particular axis. For example, a line or curve which is rotated only half way around a particular axis would generate a partial surface of revolution about that axis.

The first reference axis 22 is parallel to the second reference axis 26, and the first reference axis 22 is separated from the second reference axis 26 by a distance which defines the "reference distance" 28. Additionally, each of the reference axes is in spaced relation to the part 12, such that the surfaces of partial revolution 20, 24 are concave as opposed to being convex. The distance between points on the first surface 20 nearest the first reference axis 22, and the first reference axis 22 itself equals the minimum distance between the first reference axis 22 and the first surface 20, and thus defines a first minimum distance 30. Likewise, the distance between points on the second surface 24 nearest the second reference axis 26, and the second reference axis 26 itself equals the minimum distance between the second reference axis 26 and the second surface 24, and thus defines a second minimum distance 32. In the preferred embodiment of the present invention, the sum of the first and second minimum distances 30, 32 is greater than the reference distance 28.

As shown in Figure 3, the first surface 20 includes a first tapered surface symmetric about the first reference axis 22 and a second tapered surface 36 symmetric about the first reference axis 22. The first tapered surface 34 tapers toward the second tapered surface 36, and the second tapered surface 36 tapers toward the first tapered surface 34. In the preferred embodiment, the first surface 20 includes a first semi-cylindrical surface 38 symmetric about the first reference axis 22, and the first semi-cylindrical surface 38 spans between the first tapered surface 34 and the second tapered surface 36.

The second surface 24 includes a third tapered surface 40 symmetric about the second reference axis 26, and a fourth tapered surface 42 symmetric about the second reference axis 26. The third tapered surface 40 tapers toward the fourth tapered surface 42, and the fourth tapered surface 42 tapers toward the third tapered surface 40. As in the case of the first surface 20, the second surface 24 includes a second semi-cylindrical surface 44 symmetric about the second reference axis 26, and the second semicylindrical surface 44 spans between the third tapered surface 40 and the fourth tapered surface 42.

The first surface of partial revolution 20 defines an arc angle about the first reference axis 22 not greater than 180 degrees, and the second surface of partial revolution 24 likewise defines an arc angle about the second reference axis 26 not greater than 180 degrees. As used herein, the term "arc angle" means the angle about a particular axis through which partial rotation occurs to generate a particular surface of partial revolution. For example, an arc angle of 180 degrees represents one half of a complete rotation about a particular axis. Thus, in the preferred embodiment of the present invention, the first and second surfaces 20, 24 comprise surfaces generated by not more than one half of a revolution about the first axis 22 or the second axis 26, respectively.

The edge contour 10 of the present invention is preferably incorporated at locations in the part 12 where stress concentrations are generally believed to exist. During initial inspection of the part, or during maintenance inspection of the part, an eddy current probe having a radius slightly less than the first minimum distance is positioned so that the longitudinal axis of the probe is colinear with the first reference axis 22. The eddy current inspection of the first surface 20 is conducted as described above, and then the second surface is likewise inspected. As those skilled in the art will readily appreciate, if the first and second minimum distances 30, 32 are equal, the same eddy current probe used to inspect the first surface 20 can be used to inspect the second surface 24 by positioning the probe so that the longitudinal axis of the probe is colinear with the second reference axis 26.

It should be clear from the foregoing that additional surfaces of partial revolution can be incorporated into the edge of a given part to make the entire edge inspectable by the eddy current process if a particular application requires such inspection. As long as the minimum distance between each surface and its respective reference axis is equal to the minimum distances of the other surfaces of partial revolution, the same eddy current probe can be utilized for each such surface. Additionally, the location 50, shown in Figure 1, can be machined or radiused as desired to form a smooth transition between the first and second surfaces 20, 24, to eliminate sharp edges that might otherwise pose a danger to those who assemble handle the particular parts incorporation the edge contour of the present invention.

Although this invention has been shown and described with respect to detailed embodiments thereof, it will be understood by those skilled in the art that various changes in form and detail thereof may be made without departing from the scope of the invention as defined by the following claims.

## Claims

1. A part (12) having an edge contour (10) including:
a first surface (20) of partial revolution about a first reference axis (22), and
a second surface (24) of partial revolution about a second reference axis (26),
wherein the first reference axis (22) is parallel to the second reference axis (26) and separated therefrom by a reference distance (28), the minimum distance between the first reference axis (22) and the first surface (20) defines a first minimum distance (30), the minimum distance between the second reference axis (26) and the second surface (24) defines a second minimum distance (32), and the sum of the first and second minimum distances (30, 32) is greater than the reference distance (28).

2. The part of claim 1 wherein each of the reference axes (22, 24) is in spaced relation to the part (12).

3. The part of claim 1 or 2 wherein the first surface (20) includes a first tapered surface (34) symmetric about the first reference axis (22), a second tapered surface (36) symmetric about the first reference axis (22), the first tapered surface (34) tapers toward the second tapered surface (36), and the second tapered surface (36) tapers toward the first tapered surface (34).

4. The part of claim 3 wherein the first surface includes a first semi-cylindrical surface (38) symmetric about the first reference axis (22), and the first semi-cylindrical surface (38) spans between the first tapered surface (34) and the second tapered surface (36).

5. The part of any preceding claim wherein the second surface (24) includes a third tapered surface (40) symmetric about the second reference axis (26), a fourth tapered surface (42) symmetric about the second reference axis (26), the third tapered surface (40) tapers toward the fourth tapered surface (42), and the fourth tapered surface (42) tapers toward the third tapered surface (40).

6. The part of claim 5 wherein the second surface includes a second semi-cylindrical surface (44) symmetric about the second reference axis (26) and the second semi-cylindrical surface (44) spans between the third tapered surface (40) and the fourth tapered surface (42).

7. The part of any preceding claim wherein the first surface (20) of partial revolution defines an arc angle about the first reference axis (22) not greater than 180 degrees, and the second surface of partial revolution (29) defines an arc angle about the second reference axis (26) not greater than 180 degrees.
